# FASCICULE DE BREVET EUROPEEN

(11) **EP 1 697 136 B1**
(45) Date de publication et mention de la délivrance du brevet: **13.02.2013**
(21) Numéro de dépôt: 04804676.7
(22) Date de dépôt: 03.12.2004
(51) Int. Cl.: B32B 37/10, B32B 37/04

(54) **PROCÉDÉ DE DOUBLAGE ET INSTALLATION DE DOUBLAGE POUR FABRIQUER DES PRODUITS MULTICOUCHES**
LAMINIERUNGSVERFAHREN UND -ANLAGE ZUR HERSTELLUNG VON MEHRLAGIGEN PRODUKTEN
LAMINATION METHOD AND INSTALLATION FOR MANUFACTURING MULTILAYERED PRODUCTS

(30) Priorité: 04.12.2003 EP 03293039
(43) Date de publication de la demande: 06.09.2006
(73) Titulaire: Tarkett SAS, 92000 Nanterre (FR)
(72) Inventeur: FORGET, Luc, L-9761 LENTZWEILER (LU); SICHE, Alexandre, L-9540 WILTZ (LU)
(74) Mandataire: pronovem
(86) Numéro de dépôt international: PCT/EP2004/053266
(87) Numéro de publication internationale: WO 2005/053957

(56) Documents cités:
- EP-A- 1 004 432
- GB-A- 2 145 371
- US-B1- 6 287 706
- PATENT ABSTRACTS OF JAPAN vol. 0172, no. 68 (M-1416), 25 mai 1993 (1993-05-25) & JP 05 004248 A (HITACHI CHEM CO LTD), 14 janvier 1993 (1993-01-14)

## Description

L'invention a pour objet un procédé de doublage ainsi qu'une installation de doublage pour fabriquer des produits multicouches, utilisés notamment pour la confection de revêtements de sols ou de revêtements muraux, ainsi que pour l'habillage intérieur de véhicules servant au transport de personnes, tels que des voitures automobiles, des voitures de chemin de fer, des cabines de navires et des cockpits d'avions.

Les produits multicouches comprenant un support polymérique et une couche d'usure contenant du copolymère de type ionomère sont particulièrement visés.

Pour la fabrication des revêtements de sols et muraux, ainsi que des habillages d'habitacles de véhicules, on utilise habituellement des produits multicouches en feuilles, comprenant une couche de support ou substrat et une couche superficielle d'usure. La couche de support présente généralement une face décorative sur laquelle est appliquée la couche d'usure. Celle-ci sert à protéger la face décorative du substrat. Elle est habituellement transparente et doit présenter une résistance adéquate aux agressions mécaniques (chocs, abrasion) et aux agressions chimiques dans les conditions normales d'utilisation. Ces fonctions des produits multicouches conditionnent le choix des matières utilisées pour les fabriquer. Ce choix est en outre conditionné par des considérations sanitaires, environnementales et de mise en oeuvre. En particulier, les produits multicouches doivent s'accommoder d'une mise en oeuvre par laminage ou thermoformage, ce qui implique l'usage de polymères thermoplastiques. L'adhérence des couches superposées doit être suffisante pour assurer la cohésion du produit multicouche dans les applications auxquelles on le destine. Il est en outre souhaitable de sélectionner des matières qui permettent un recyclage des produits multicouches usagés. Il convient par ailleurs d'éviter ou de limiter l'exsudation de matières volatiles (telles que des plastifiants) pendant l'usage de ces produits multicouches.

Le polychlorure de vinyle (PVC) a longtemps été utilisé pour la fabrication de produits multicouches en feuilles destinés à la confection de tapis, revêtements muraux ou habillages d'habitacles de véhicules. Toutefois, des considérations liées à la protection de l'environnement militent pour le remplacement du polychlorure de vinyle par des polymères ou des copolymères exempts de chlore. Le choix s'est tout naturellement porté sur les polymères et copolymères oléfiniques, spécialement les polymères et les copolymères de l'éthylène et du propylène, étant donné leur prix de revient relativement bas et leurs bonnes propriétés chimiques et thermiques.

Un inconvénient des polymères oléfiniques dans de telles applications réside dans les difficultés rencontrées au moment du doublage des couches individuelles pour former un produit multicouches. En effet, les produits oléfiniques se prêtent mal à un laminage puisque les produits ont tendance à adhérer aux cylindres de laminage.

La technique utilisée conventionnellement dans les revêtement de sol en PVC, à savoir une enduction suivie d'une gélification n'est pas réalisable dans le cas des produits oléfiniques et/ou ionomères.

Le document EP 1004432 décrit un revêtement de surface texturée ayant une couche d'usure thermofussible et des méthodes d'application d'une couche d'usure thermofussible sur une surface texturée ou grainée sans distorsion de l'image visuelle du substrat texturé. La couche d'usure suit sensiblement les contours du substrat avec un minimum de changement d'épaisseur de la couche d'usure sur la surface texturée et donne une apparence esthétique trois dimensions à la surface texturée du substrat. L'application à chaud d'une résine polymère thermofussible sur un substrat texturé à l'aide d'un cylindre de pression piège les bulles entre la couche d'usure et le substrat texturé. Ainsi, la couche d'usure présente une transparence significative et une profondeur visuelle, ainsi que des propriétés de maintenance améliorées. Le produit résultant présente une clarté d'image visuelle qui reflète toute la texture du substrat, y compris des grainages très réfléchissant.

Le document GB 2145371 divulgue un procédé pour former des carreaux en relief raccord avec un décor imprimé. Un motif imprimé est d'abord appliqué à une couche de base et une couche d'usure est laminée sur le décor. Avantageusement, la couche d'usure est appliquée au support imprimée avant d'être chauffé pour le laminage. Avant le grainage, le cylindre de gainage est pulvérisé avec de l'eau afin de minimiser la probabilité que le produit laminé n'adhère au cylindre de grainage. Pour éviter la distorsion du support pendant le laminage et le grainage, une tension appropriée est maintenue en contrôlant la vitesse de rotation du cylindre de laminage et le cylindre de grainage de telle sorte que le ratio désiré est préservée. Le support est ensuite découpé en carreaux surdimensionné qui rétrécissent au cours du recuit.

L'invention vise à créer une nouvelle technique de doublage de feuilles afin d'obtenir un produit multicouche présentant une adhérence suffisante entre les couches qui le constituent et un aspect de surface de haute qualité.

Cet objectif est atteint par l'installation de doublage selon la revendication 1 cet par le procédé de laminage selon la revendication 2.

En conséquence, l'invention concerne un procédé de fabrication de produits multicouches comprenant, sur un substrat polymérique, au moins une couche d'usure en polymère thermoplastique. Le procédé est caractérisé par les étapes suivantes :
○ préchauffage du support, de préférence à une température comprise entre 100 et 130 DEG C,
○ mise en contact du support avec la couche d'usure,
○ fusion de la couche d'usure sur le support pour assurer son adhérence avec le support, de préférence à une température comprise entre 120°C et 180°C,
○ refroidissement du produit obtenu pour l'amener à une température proche de la température ambiante.

Grâce à ce procédé, il est possible d'obtenir un produit multicouches ayant de bonnes propriétés physiques et chimiques, notamment en ce qui concerne la cohésion interne, l'adhérence des couches le constituant, les propriétés thermiques, la résistance mécanique à l'usure et aux chocs, la résistance aux agressions chimiques et la transparence de la couche superficielle d'usure. Le produit ainsi obtenu présente un aspect de surface de haute qualité.

Un des avantages de ce procédé réside dans le fait que la couche d'usure est appliquée à froid (non préchauffée - à température ambiante) et elle n'est pas en contact avec des cylindres de laminage. Les problèmes d'aspect de surfaces résultant d'une adhésion localisée sur le cylindre de laminage sont ainsi évités. Au lieu d'exercer la pression requise pour réunir et solidariser le support et la couche d'usure par un cylindre de laminage ou un autre dispositif comparable, l'adhérence de la couche d'usure est obtenue par une fusion de celle-ci réalisée dans un four par soufflage d'air chaud sur la surface supérieure du produit l'adhérence de la couche d'usure. Dans la pratique et pour des raisons d'économie, on utilise comme gaz de l'air, de préférence de l'air préchauffé à une température voisine de celle qui règne à l'intérieur du four. Pour des applications particulières, il est également envisageable d'utiliser des gaz inertes comme par exemple de l'azote ou de l'air appauvri en oxygène pour minimiser d'éventuelles réactions d'oxydation.

La couche d'usure n'est pas préchauffée avant de l'appliquer sur le support qui lui est préchauffé. Un avantage de l'application de la couche d'usure froide (à température ambiante) est que son maniememnt est plus facile puisque la couche d'usure n'est pas ramollie par la chaleur que jusqu'au momment où elle entre en contact avec le support préchauffé. La couche d'usure est en fait une feuille ou un film qui est appliqué sur le support et non pas une masse fondue qui est étalée sur le support.

Il est également important de noter que la couche d'usure est fondue de manière contrôlée seulement pendant le passage dans le four et non pas avant la mise ne contact avec le support. De ce fait, la pression de gaz appliquée sur la surface de la couche d'usure ne risque pas de créer de défauts de surface apparaissant dans le produit fini.

Ce procédé est particulièrement bien adapté à la fabrication de produits multicouches en grande largeur (+/- 4 m) comprenant, sur un substrat polymérique, une couche d'usure en polymère du type ionomère ou PO. Les produits peuvent comprendre en outre, entre le substrat et la couche d'usure, une couche intermédiaire d'un polymère oléfinique contenant un métallocène.

Le support des produits multicouches a pour fonction de servir de support mécanique. Il peut comporter une impression décorative sur une de ses faces ou sur ses deux faces. L'impression peut également être réalisée sur la couche d'usure si celle-ci est transparente. Le support peut également comprendre une charge minérale. Il comprend pour l'essentiel un composé polymérique, généralement oléfinique. Le composé polymérique peut être un homopolymère ou un copolymère oléfinique.

Par la suite, pour des raisons de simplification, l'expression « polymère » désignera indifféremment un homopolymère ou un copolymère.

Le polymère oléfinique entrant dans la constitution du support des produits selon l'invention peut être sélectionné parmi les polymères de l'éthylène, du propylène et du butylène. Il peut être un homopolymère ou un copolymère, par exemple un copolymère de l'éthylène et du propylène ou un copolymère de l'éthylène et du butylène. Les polyéthylènes standard et/ou les polyéthylènes métallocène sont préférés. Les polyéthylènes à haute densité (HDPE), les polyéthylènes à basse densité (LDPE), les polyéthylènes linéaires à basse densité (LLDPE) et les polyéthylènes linéaires à très basse densité (VLDPE) sont spécialement recommandés.

Dans les produits multicouches, le polymère oléfinique du support est avantageusement exempt de liaisons ioniques. Par l'expression « exempt de liaison ionique », on entend que le nombre de groupements d'acides carboxyliques dans le polymère n'excède pas 25% et est par exemple compris entre 0 et 15%.

Le polymère du support peut comprendre des charges minérales destinées à lui conférer des propriétés mécaniques particulières. Des charges minérales utilisables dans le support comprennent le carbonate de calcium, le carbonate de magnésium, le sulfate de calcium, le carbonate de baryum, le sulfate de baryum, le kaolin, la silice pyrogénée, l'hydrate d'aluminium et le graphite expansé.

La couche d'usure a pour fonction de protéger le support contre des agressions mécaniques et chimiques dans les applications auxquelles les produits multicouches selon l'invention sont destinés. Elle comprend de préférence un polymère du type ionomère.

Les polymères du type ionomère de la couche d'usure sont bien connus en technique. Il s'agit de copolymères à liaisons ioniques, comprenant une chaîne hydrocarbonée contenant des groupes latéraux d'acide carboxylique neutralisés partiellement ou totalement par des cations. La chaîne hydrocarbonée est une chaîne oléfinique, par exemple éthylénique. Les groupes d'acide carboxylique comprennent par exemple des acides carboxyliques éthyléniquement non saturés en α et β et les cations peuvent par exemple comprendre des cations métalliques ou des cations d'amine. Davantage d'informations concernant les copolymères du type ionomère sont notamment accessibles dans les documents FR-A-1 430 478, US-A-3 264 272 et US-A-3 322 734 ainsi que dans l'article « The structure and properties of ionomers » - W.J. Machnight et T.R. Earnest Jr., publié dans l'ouvrage Macromolecules Reviews, Vol. 16, pages 41-122 (1981).

L'épaisseur optimale de la couche d'usure dépend de divers paramètres, tels que la matière utilisée pour ladite couche d'usure et les applications auxquelles on destine les produits multicouches. En pratique, on obtient généralement de bons résultats avec des couches d'usure d'au moins 30 µm (de préférence 60 µm) d'épaisseur, les épaisseurs comprises entre 40 et 300 µm étant spécialement avantageuses.

En variante, la couche d'usure peut être revêtue d'une couche superficielle de polyuréthane, pour renforcer la résistance à l'usure par abrasion.

La couche d'usure peut comprendre une ou plusieurs couches intermédiaires d'un polymère oléfinique contenant un métallocène. Cette couche intermédiaire est fixée sur la couche d'usure de sorte qu'elle se situe dans le produit fini entre le support et la couche d'usure. Avantageusement, cette couche intermédiaire est transparente.

Avantageusement, la couche intermédiaire comprend un polymère oléfinique qui peut être indifféremment un homopolymère ou un copolymère. Les homopolymères conviennent bien. Les homopolymères de l'éthylène sont préférés et, parmi ceux-ci, les polyéthylènes à basse densité (LDPE) sont spécialement recommandés.

Dans les produits multicouches, la (les) couche(s) intermédiaire(s) peut (peuvent) comprendre un polymère oléfinique unique ou un mélange de polymères oléfiniques différents, conformes à la définition précédente. Par la suite, sauf indication contraire, l'expression polymère oléfinique de la couche intermédiaire désignera indifféremment un polymère oléfinique unique ou un mélange d'au moins deux polymères oléfiniques différents, le ou chaque polymère pouvant indifféremment être un homopolymère ou un copolymère.

Dans la couche d'usure, le polymère oléfinique de la couche intermédiaire a également pour fonction de permettre la fabrication de couches d'usure sous forme de feuilles ou de films par la technique d'extrusion soufflage ou d'en améliorer les performances. Il permet plus particulièrement, dans la mise en oeuvre de cette technique d'extrusion soufflage, de stabiliser des bulles de grande dimension et d'épaisseur suffisante.

La couche d'usure sous forme de feuille ainsi obtenue peut donc comprendre une couche externe d'un produit qui sert à former la couche superficielle du produit multicouche, une couche intermédiaire d'un polymère oléfinique comprenant le cas échéant des additifs tels que des acides gras et/ou de la silice et une couche en un polymère oléfinique comprenant un métallocène.

Par métallocène, on entend les polyoléfines respectivement les polyéthylènes fabriqués à l'aide de catalyseurs métallocène qui sont bien connus en technique. Le métallocène utilisable est avantageusement sélectionné parmi les polyoléfines et plus particulièrement parmi les polyéthylènes ayant une densité inférieure à 0.900. Les produits multicouches peuvent comprendre un métallocène unique ou un mélange de métallocènes différents, conformes à la définition précédente. Par la suite, sauf indication contraire, l'expression métallocène désignera indifféremment un métallocène unique ou un mélange d'au moins deux métallocènes différents.

Dans des produits multicouches, le métallocène a pour fonction de réaliser une adhérence encore plus efficace de la couche intermédiaire à la couche d'usure et au support. A cet effet, il est présent dans la couche intermédiaire en une quantité qui est de préférence supérieure à 1 partie (de manière plus préférée 5 parties) en poids pour 100 parties en poids de polymère oléfinique. On utilise avantageusement au moins 5 parties (de préférence au moins 15 parties) en poids de métallocène pour 100 parties en poids de polymère oléfinique.

Il convient toutefois d'éviter une quantité exagérée de métallocène, sous peine de nuire à la stabilité de la bulle lorsque les couches d'usure selon l'invention sont fabriqués par la technique d'extrusion soufflage. D'une manière générale, on recommande que la quantité de métallocène dans le polymère oléfinique de la couche intermédiaire n'excède pas 40 parties en poids pour 100 parties en poids de polymère et soit de préférence inférieure à 30 parties en poids pour 100 parties en poids du polymère oléfinique. Des quantités de métallocène de 5 à 20 (de préférence de 8 à 15) parties en poids pour 100 parties en poids de polymère oléfinique conviennent généralement.

Le métallocène peut être introduit dans le polymère oléfinique de la couche intermédiaire sous la forme d'une charge. Dans une forme de réalisation particulière des couches d'usure multicouches, une couche additionnelle de polyéthylène à basse densité (LDPE) est interposée entre le support et la couche intermédiaire précitée. Cette couche additionnelle peut également contenir des acides gras et/ou de la silice. Ces additifs améliorent d'une part l'adhérence de la couche intermédiaire au support et d'autre part facilitent l'extrusion par soufflage.

Les polymères entrant dans la constitution des couches d'usure multicouches peuvent éventuellement contenir des additifs communément présents dans les produits multicouches pour leur conférer des propriétés particulières ou faciliter leur mise en oeuvre, par exemple des lubrifiants, des plastifiants, des pigments ou des agents de moussage.

Les couches d'usure multicouches combinent un ensemble de propriétés intéressantes, considérées auparavant comme étant incompatibles, en particulier une haute résistance à l'usure par abrasion et aux autres agressions mécaniques, une haute résistance aux agressions chimiques et une grande cohésion.

L'invention concerne dès lors également une installation de doublage comprenant un dispositif d'amenée d'un support, une station de préchauffage du support, un dispositif d'alimentation d'une couche d'usure sous forme de feuille ou de film, un dispositif de mise en contact du support et de la couche d'usure, un four de chauffage comprenant une ou plusieurs buses de soufflage pour un gaz ainsi qu'un dispositif de transport transportant le support et la couche d'usure à travers ledit four de chauffage. Le support est acheminé via le dispositif d'amenée - qu i peut être un dérouleur de rouleaux p.ex. - dans la station de préchauffage dans laquelle il est préchauffé à une température comprise entre 100 et 130°C. La station de préchauffage peut par exemple être un four à rayonnements infrarouges.

Le support préchauffé est ensuite mis en contact avec la couche d'usure dans le dispositif de mise en contact après avoir été acheminé à l'aide du dispositif d'amenée de la couche d'usure. Il est à noter que le dispositif de mise en contact de la couche d'usure et du support exerce une certaine pression sur la surface supérieure de la couche d'usure, ceci notamment pour minimiser les emprisonnements d'air entre le support et la couche d'usure.

Le dispositif de mise en contact est avantageusement un presseur qui presse la couche d'usure qui est à température ambiante sur le support préchauffé. Préférablement, le presseur se situe au-dessus du dispositif de transport qui amène le support et la couche d'usure dans le four. Le dispositif de transport étant flexible, on peut assurer que la couche d'usure est appliquée sur le support avec une pression faible comprise entre 100 et 1000 g/cm². Vu que la couche d'usure n'est pas préchauffée, cette opération ne créera pas de défauts de surface. Cependant, comme le support est préchauffé et sa surface ramollie de ce fait, le support possède un certain degré d'adhésivité et une certaine viscosité et ainsi la couche d'usure appliquée contre le support va y adhérer.

Le support sur lequel la couche d'usure est appliquée est ensuite acheminé à travers le four de chauffage à l'intérieur duquel l'ensemble couche d'usure - support est chauffé à une température comprise entre 120°C et 180 °C sur le dispositif de transport. Pendant ce transport, la couche d'usure est fondue et une légère pression est exercée sur l'ensemble support - couche d'usure au moyen de la buse de soufflage de gaz - de préférence un gaz chaud.

L'installation selon l'invention permet d'obtenir des produits revêtus d'une couche d'usure multicouches de grandes dimensions, dont la largeur peut atteindre plusieurs mètres. Plus spécialement, l'installation selon l'invention permet la fabrication de produits en bandes dont la largeur excède 4 m avec une épaisseur de la couche d'usure excédant 60 µm et pouvant atteindre 200 µm et même plus.

Les produits obtenus trouvent des applications multiples. Ils trouvent des applications dans l'industrie du bâtiment, pour la confection de tapis, de moquettes et de revêtements muraux. On les utilise également dans l'industrie automobile, l'aviation, la marine et le chemin de fer, pour la fabrication de moquettes ainsi que pour le recouvrement des parois des habitacles, cockpits et cabines des véhicules.

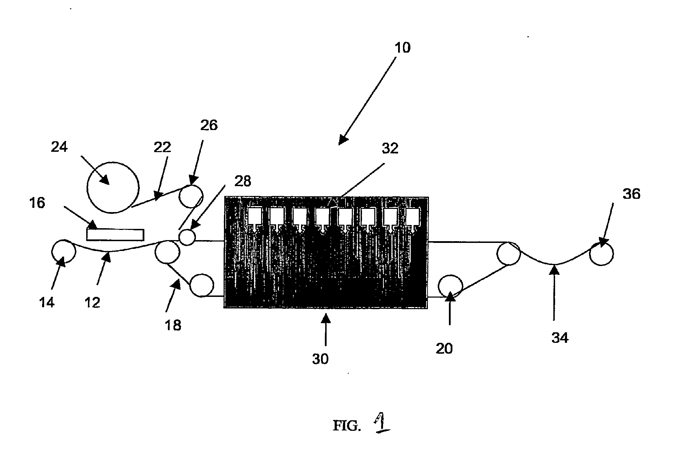

La description qui suit de la figure unique du dessin annexé illustre une forme de réalisation particulière de l'installation selon l'invention.

La référence 10 indique l'installation de doublage. Le support 12 est déroulé du rouleau de stockage 14 et est conduit en dessous d'une lampe à infrarouges 16 où le support est chauffé à une température d'environ 120. °C de sorte à ramollir sa surface supérieure. Le support préchauffé est ensuite posé sur une bande transporteuse 18 qui permet de le transporter à travers le four. La bande transporteuse 18 est tendue sur une série de rouleaux 20 qui la font avancer et la maintiennent sous une certaine tension.

La couche d'usure 22 est également déroulée de son rouleau de stockage 24 et est amenée dans un déplisseur 26 afin d'obtenir un produit lisse sans plis et autres défauts de surface. La couche d'usure est ensuite guidée au-dessus de la bande transporteuse 18 et est mise en contact avec le support préchauffé au moyen d'un presseur 28 qui exerce une faible pression sur le support 12 et la couche d'usure 22 de façon à minimiser les emprisonnements d'air entre les deux.

Le support 12 et la couche d'usure 22 sont ensuite acheminés à travers le four de chauffage 30 à l'intérieur duquel l'ensemble support - couche d'usure est chauffé à une température comprise entre 120. et 180. °C. Pendant ce transport - le temps de résidence à l'intérieur du four est de 2 à 3 minutes-, la couche d'usure est fondue au moyen d'un gaz préchauffé injecté au-dessus de la bande transporteuse 18 au moyen de buses de soufflage 32 installées dans la partie supérieure du four 30. Les gaz chauffent le support et la couche d'usure et les fusionnent ensemble de sorte à avoir une cohésion adaptée entre la couche d'usure et le support à la sortie du four 30. Après refroidissement, le produit obtenu 34 est enroulé sur un rouleau de stockage 36.

## Revendications

1. Installation de doublage (10) comprenant :
un dispositif d'amenée d'un support (12),
une station de préchauffage (16) du support (12),
un dispositif d'alimentation d'une couche d'usure (22),
un dispositif d'application de la couche d'usure (22) à froid sur le support (12) préchauffé,
un four de chauffage (30) comprenant une ou plusieurs buses de soufflage (32) pour un gaz,
un dispositif de transport (18) transportant le support (12) et la couche d'usure (22) à travers ledit four de chauffage (30),
le support (12) étant acheminé via le dispositif d'amenée dans la station de préchauffage (16) dans laquelle il est préchauffé à une température comprise entre 100 et 130°C, puis le support (12) préchauffé étant mis en contact avec la couche d'usure (22) dans le dispositif de mise en contact, la couche de support (12) ayant été acheminée à l'aide du dispositif d'amenée de la couche d'usure (22), le support (12) et la couche d'usure (22) étant ensuite acheminés à travers le four de chauffage (30) à l'intérieur duquel l'ensemble couche d'usure et support (22, 12) est chauffé à une température comprise entre 120 et 180 °C et transporté à travers le four (30) sur le dispositif de transport (18), une pression étant exercée pendant ce transport sur l'ensemble support - couche d'usure (22, 12) au moyen de la buse de soufflage (32) de gaz afin de fusionner la couche d'usure (22) et le support (12).

2. Procédé de laminage pour fabriquer un produit multicouche (34) comprenant, sur un support (12) polymérique, au moins une couche d'usure (22) en polymère thermoplastique, **caractérisé en ce qu'**il comprend les étapes suivantes :
- préchauffage du support (12) à une température comprise entre 100 et 130 °C,
- application de la couche d'usure (22) à froid sur le support (12) préchauffé,
- fusion de la couche d'usure (22) pour assurer son adhérence avec le support (12) à une température comprise entre 120°C et 180°C, ladite fusion étant réalisée dans un four de chauffage (30) comprenant une ou plusieurs buses de soufflage (32) pour un gaz, une pression étant exercée sur l'ensemble support-couche d'usure au moyen de la buse de soufflage de gaz (32)
- refroidissement du produit obtenu pour l'amener à une température proche de la température ambiante.

3. Procédé selon la revendication 1, **caractérisé en ce que** la couche d'usure (22) comprend une ou plusieurs couches intermédiaires.

4. Procédé selon la revendication 1 ou 2, **caractérisé en ce que** le support (12) polymérique et la couche d'usure (22) comprennent des polymères oléfiniques.

5. Procédé selon l'une quelconque des revendications 2 à 4, **caractérisé en ce que** la couche intermédiaire contient plus de 5 parties en poids de métallocène pour 100 parties en poids de polymère oléfinique.

6. Procédé selon l'une quelconque des revendications 1 à 5, **caractérisé en ce qu'**une couche additionnelle en polyoléfine éthylène à basse densité est interposée entre le support et la couche intermédiaire.

7. Procédé selon la revendication 6, **caractérisé en ce que** la couche additionnelle comprend du polyéthylène à base densité et le cas échéant un ou plusieurs additifs choisis parmi le groupe constitué des acides gras et de la silice.

8. Procédé selon l'une quelconque des revendications 1 à 7, **caractérisé en ce qu'**une couche superficielle en polyuréthane est appliquée sur la couche d'usure (22).

9. Procédé de laminage pour fabriquer un produit multicouche (34) selon l'une quelconque des revendications 2 à 8, mettant en oeuvre une installation de doublage (10) selon la revendication 1.

10. Procédé de laminage pour fabriquer un produit multicouche (34) selon l'une quelconque des revendications 2 à 9 comprenant une étape de confection de revêtements de sol ou muraux.

## Claims

1. Lamination machine (10) comprising:
- a device for delivering a support (12);
- a station (16) for preheating the support (12);
- a device for supplying a wear layer (22);
- a device for applying the wear layer (22) cold to the preheated support (12);
- an oven (30) comprising one or more blowers (32) for blowing a gas;
- a transport device (18) for transporting the support (12) and the wear layer (22) through said oven (30),
the support (12) being conveyed via the delivery device into the preheating station (16) in which it is preheated to a temperature between 100 and 130°C, the preheated support (12) then being brought into contact with the wear layer (22) in the contacting device, the supporting layer (12) having being conveyed using the delivery device of the wear layer (22), the support (12) and the wear layer (22) then being conveyed through the oven (30) inside of which the wear layer/support assembly (22, 12) is heated to a temperature between 120 and 180°C and transported through the oven (30) on the transport device (18), pressure being exerted during this transportation on the support/wear layer assembly (22, 12) by means of the gas blower (32) in order to melt the wear layer (22) and the support (12).

2. Lamination process for manufacturing a multilayer product (34) comprising, on a polymer support (12), at least one wear layer (22) made of a thermoplastic polymer, **characterized in that** it comprises the following steps:
- preheating the support (12) to a temperature between 100 and 130°C;
- applying the wear layer (22) cold to the preheated support (12);
- melting the wear layer (22), in order to ensure it adheres to the support (12), at a temperature between 120°C and 180°C, said melting being carried out in an oven (30) comprising one or more blowers (32) for blowing a gas, pressure being exerted on the support/wear layer assembly by means of the gas blower (32); and
- cooling the product obtained so as to bring it to a temperature near room temperature.

3. Process according to Claim 1, **characterized in that** the wear layer (22) comprises one or more intermediate layers.

4. Process according to either of Claims 1 and 2, **characterized in that** the polymer support (12) and the wear layer (22) comprise olefin polymers.

5. Process according to any one of Claims 2 to 4, **characterized in that** the intermediate layer contains more than 5 parts by weight of metallocene for 100 parts by weight of olefin polymer.

6. Process according to any one of Claims 1 to 5, **characterized in that** an additional layer made of low-density ethylene polyolefin is interposed between the support and the intermediate layer.

7. Process according to Claim 6, **characterized in that** the additional layer comprises low-density polyethylene and, depending on the circumstances, one or more additives chosen from the group formed by fatty acids and silica.

8. Process according to any one of Claims 1 to 7, **characterized in that** a superficial layer made of polyurethane is applied to the wear layer (22).

9. Lamination process for manufacturing a multilayer product (34) according to any one of Claims 2 to 8, employing a lamination machine (10) according to Claim 1.

10. Lamination process for manufacturing a multilayer product (34) according to any one of Claims 2 to 9, comprising a step of manufacturing floor or wall coverings.

## Patentansprüche

1. Laminierungsanlage (10), umfassend:
- eine Zuführvorrichtung eines Trägers (12),
- eine Vorwärmstation (16) für den Träger (12),
- eine Vorrichtung zur Versorgung mit einer Verschleißschicht (22),
- eine Vorrichtung zum Aufbringen der kalten Verschleißschicht (22) auf den vorgewärmten Träger (12),
- einen Heizofen (30), umfassend eine oder mehrere Einblasdüsen (32) für ein Gas,
- eine Fördereinrichtung (18), die den Träger (12) und die Verschleißschicht (22) durch den Heizofen (30) befördert,
wobei der Träger (12) mittels der Zuführvorrichtung in die Vorwärmstation (16) befördert wird, in der er auf eine Temperatur zwischen 100 und 130 °C vorgewärmt wird, wobei der vorgewärmte Träger (12) dann mit der Verschleißschicht (22) in der Vorrichtung zur Kontaktherstellung in Kontakt gebracht wird, wobei die Trägerschicht (12) mittels der Zuführvorrichtung der Verschleißschicht (22) befördert wurde, wobei der Träger (12) und die Verschleißschicht (22) dann durch den Heizofen (30) befördert werden, in dem die Einheit Verschleißschicht und Träger (22, 12) auf eine Temperatur zwischen 120 und 180 °C erwärmt wird und durch den Ofen (30) auf die Fördereinrichtung (18) befördert wird, wobei ein Druck während dieser Beförderung auf die Einheit Träger - Verschleißschicht (22, 12) mittels der Gaseinblasdüse (32) ausgeübt wird, um die Verschleißschicht (22) und den Träger (12) zu verschmelzen.

2. Laminierungsverfahren zur Herstellung eines mehrschichtigen Produktes (34), umfassend auf einem Polymerträger (12) mindestens eine Verschleißschicht (22) aus thermoplastischem Polymer, **dadurch gekennzeichnet, dass** es die folgenden Schritte umfasst:
- Vorwärmen des Trägers (12) auf eine Temperatur zwischen 100 und 130 °C,
- Aufbringen der kalten Verschleißschicht (22) auf den vorgewärmten Träger (12),
- Schmelzen der Verschleißschicht (22), um ihr Anhaften am Träger (12) bei einer Temperatur zwischen 120 °C und 180 °C zu gewährleisten, wobei das Schmelzen in einem Heizofen (30) erfolgt, umfassend eine oder mehrere Einblasdüsen (32), für ein Gas, wobei ein Druck auf die Einheit Träger-Verschleißschicht mit Hilfe der Gaseinblasdüse (32) ausgeübt wird,
- Abkühlen des erhaltenen Produkts, um es auf eine Temperatur nahe der Raumtemperatur zu bringen.

3. Verfahren nach Anspruch 1, **dadurch gekennzeichnet, dass** die Verschleißschicht (22) eine oder mehrere Zwischenschichten umfasst.

4. Verfahren nach Anspruch 1 oder 2, **dadurch gekennzeichnet, dass** der Polymerträger (12) und die Verschleißschicht (22) Olefinpolymere umfassen.

5. Verfahren nach einem der Ansprüche 2 bis 4, **dadurch gekennzeichnet, dass** die Zwischenschicht mehr als 5 Gewichtsteile Metallocene auf 100 Gewichtsteile Olefinpolymer enthält.

6. Verfahren nach einem der Ansprüche 1 bis 5, **dadurch gekennzeichnet, dass** eine zusätzliche Schicht aus Ethylenpolyolefin mit geringer Dichte zwischen dem Träger und der Zwischenschicht angeordnet ist.

7. Verfahren nach Anspruch 6, **dadurch gekennzeichnet, dass** die zusätzliche Schicht Polyethylen mit geringer Dichte und gegebenenfalls einen oder mehrere Zusatzstoffe umfasst, die in der Gruppe, die von den Fettsäuren und Siliziumoxid gebildet ist, ausgewählt werden.

8. Verfahren nach einem der Ansprüche 1 bis 7, **dadurch gekennzeichnet, dass** eine oberflächliche Schicht aus Polyurethan auf die Verschleißschicht (22) aufgebracht wird.

9. Laminierungsverfahren zur Herstellung eines mehrschichtigen Produkts (34) nach einem der Ansprüche 2 bis 8, das eine Laminierungsanlage (10) nach Anspruch 1 einsetzt.

10. Laminierungsverfahren zur Herstellung eines mehrschichtigen Produkts (34) nach einem der Ansprüche 2 bis 9, umfassend einen Schritt der Ausführung von Boden- oder Wandverkleidungen.
